# EUROPEAN PATENT SPECIFICATION

(11) **EP 4 318 513 B1**
(45) Date of publication and mention of the grant of the patent: **02.12.2026**
(21) Application number: 22188825.8
(22) Date of filing: 04.08.2022
(51) Int. Cl.: H01G 9/00, H01G 9/028, H01G 9/07, H01G 9/045, H01G 9/15, H01G 9/08

(54) **METHOD FOR MANUFACTURING A POLYMER ELECTROLYTIC (PEDOT/PSS) ANODIC CAPACITOR**
VERFAHREN ZUR HERSTELLUNG EINES POLYMER-ELEKTROLYTISCHEN (PEDOT/PSS) ANODISCHEN KONDENSATORS
PROCÉDÉ DE FABRICATION D'UN CONDENSATEUR ANODIQUE À ÉLECTROLYTIQUE POLYMÈRE (PEDOT/PSS)

(43) Date of publication of application: 07.02.2024
(73) Proprietor: ECPE Engineering Center for Power Electronics GmbH, 90443 Nürnberg (DE)
(72) Inventor: Ebel, Thomas, 26866 Mildstedt (DE); Burkahl-Donau, Steffen, 6300 Gråsten (DK)
(74) Representative: Epping - Hermann - Fischer

(56) References cited:
- JP-A- 2007 095 934
- JP-B2- 6 933 931
- US-A1- 2014 168 857
- US-B1- 6 243 256

## Description

The present invention concerns a polymer electrolytic capacitor and a method to manufacture the same.

Polymer electrolytic capacitors are used in electronic circuits where high capacitance, low ESR and enhanced ripple current capability are needed.

However, such capacitors are limited to a working voltage of not more than 400 V at room temperature (see e.g.: Next Generation of Polymer Capacitors: Boosting Performance of Electrolytic Capacitors with Conductive Polymer Dispersions, U. Merker, K. Wussow, K. Astemann - Proceedings of 1st PCNS Conf., 2017).

Further examples of polymer electrolytic capacitors with lower working voltages are disclosed in JP 2007 095934 A, US 6 243 256 B1 or JP 6 933931 B2.

In cases where working voltages of more than 400 V and enhanced temperatures are required, polymer electrolytic capacitors are sensitive to short circuits (breakdown) between the anode and the cathode electrodes. Therefore, other capacitor types like liquid electrolytic capacitors are used in electronic circuits at working voltages higher than 400 V.

Up to now, high voltage polymer electrolytic capacitors have the disadvantage that the reliability of these products was not adequate to use in commercial electronic circuits.

However, e.g., for electrical vehicle chargers and inverters, capacitors voltage classes of more than 400 V become relevant. An example of a state of art high voltage capacitor is disclosed in US 2014 / 168857 A1.

The present invention provides a manufacturing method for manufacturing of a polymer electrolytic capacitor according to claim 1, a polymer electrolytic capacitor according to claim 12, and use of the polymer electrolytic capacitor according to claim 13. Further embodiments are provided in the dependent claims.

The present invention refers to a method for manufacturing of a polymer electrolytic capacitor comprising several steps.

In a first step, a metal foil is provided. The metal foil comprises aluminium with a layer on the surface comprising aluminium oxide. Preferably, the metal foil is an aluminium foil consisting of aluminium. The surface of the metal foil is preferably fully covered by a layer. The layer comprises or consists of aluminium oxide.

In a further step, an anode foil is punched out of the metal foil. The anode foil may have a rectangular shape. The anode foil may also have another appropriate shape. A rectangular shape allows to build a compact, cuboid capacitor. A punched out rectangular foil may have a length and a width of preferably at least 0.1x0.1 cm, more preferably 3x3 cm, and preferably not more than 100x100 cm, more preferably 10x10 cm. The foil may be but does not have to be quadratic. Furthermore the punched out foil may comprise a connection snip protruding from the rectangular shape.

During punching, during further optional or non-optional manufacturing steps or during transportation, the oxide layer on the surface of the metal foil may be damaged. For example, cracks in the layer may occur. Further, punched out edges of the foil lie free after punching since they are not covered by the oxide layer, so far.

In a further step, the oxide layer on the surface is reformed. In the same step, the oxide layer is also formed at the punched out edges to cover and protect the edges. Preferably, the oxide layer fully covers the foil and the edges after this step.

By reforming, defects in the oxide layer are healed. Possible defects may be e.g. structural defects in structure of the oxide or non-oxidized spots at the surface of the anode foil.

Forming and reforming of the oxide layer is performed by an oxidizing process. Preferred conditions of the oxidizing process are specified below.

The oxide layer forms a dielectrical layer of the capacitor. In a further step, the oxidized anode foil is impregnated with a polymer electrolyte solution, preferably a PEDOT:PSS-solution. The polymer electrolyte solution may at least partially diffuse in the oxide layer and enable a defined desired current flow through the dielectric layer.

Preferably, the impregnation step is conducted by vacuum impregnation and followed by drying in a ventilated oven. Drying is preferably conducted at a temperature higher than 100 °C, more preferably higher than 120 °C.

In further steps, the capacitor is built from the anode foil.

The defined steps are conducted in the stated order. Further steps that may be optional may conducted before, after or between the stated steps. No further steps may be conducted between two following of the stated steps. In particular, the step of reforming and forming the oxide layer is conducted directly before impregnation with the polymer electrolyte solution. This means, no further steps are conducted between reforming and forming the oxide layer and impregnating the oxidized anode foil with a polymer electrolyte solution.

By reforming and forming the oxide layer directly before impregnation, a formation of electrical conductive short-cuts through the oxide layer is suppressed. Thus, a breakdown voltage of the capacitor can be optimized. The breakdown voltage of a capacitor is defined as a voltage at which the dielectric layer loses desired dielectrical properties and a significant high current flow appears between anode and cathode of the capacitor.

Furthermore, by the disclosed method a capacitor with desired low ESR (Equivalent Series Resistance) values at high frequencies of alternating current can be provided.

The manufacturing method comprises a further step of stacking the anode foil, a separator paper sheet and a cathode foil to build a capacitor stack. Preferably, the separator sheet is placed directly on the oxide layer of the anode foil. Also preferably, the cathode foil is placed directly on the separator sheet. The cathode foil may also comprise aluminium or consist of aluminium. The cathode foil may also be covered by an oxide layer, preferably by an aluminum oxide layer.

The step of stacking is conducted after impregnation with the polymer electrolyte solution. Thus, impregnation is conducted directly after reforming of the oxide layer.

Preferably, the capacitor stack comprises at least two separator sheets and two cathode foils, arranged in the stated order on both sides of the anode foil to achieve a desired electrical capacity.

Preferably, the foils and sheets are stacked one after each other while each new stacked sheet or foil is impregnated by the polymer electrolyte solution before stacking the next sheet or foil. Preferably, each impregnation step is conducted by vacuum impregnation and followed by drying in a ventilated oven.

The step of reforming the oxide layer and forming the oxide layer at the punched out edges comprises several steps.

In one of such steps, the surface of the anode foil or already existing oxide layer is treated with boric acid, wherein an oxidation reaction is performed by using a boric acid solution. In particular, aluminium at the surface of the anode foil may be oxidized by the boric acid solution and heal defects or void spots in the oxide layer.

The surface treatment with boric acid is performed at an oxidizing temperature of at least 70 °C, more preferably at least 90 °C
In particular, a direct current of at least 8 mA, preferably at least 10 mA is applied to the anode foil to stimulate the oxidation reaction and heal the defects in the oxide layer until a forming voltage is reached.

In particular, when applying a direct current to the anode, an applied voltage increases until the defects in the oxide layer are healed and the voltage stabilizes at the forming voltage.

In a preferred embodiment, a direct current of at least 8 mA, preferably 10 mA, is applied to the anode foil for at least additional 1 to 2 minutes after the forming voltage is reached to heal even more defects and stabilize the oxide layer. The direct current may also be applied for a longer period.

In a further step, the anode foil is depolarized by heating the anode foil to more than 100 °C, preferably more than 140 °C, more preferably more than 150 °C. Depolarization may be conducted in an appropriate oven for several minutes, preferably for 3 to 7 minutes, more preferably for at least 5 minutes.

After depolarization, the surface treatment by boric acid comprising the application of the oxidizing boric acid solution and the application of the direct current to stimulate the oxidation reaction is repeated.

Thereafter, a step of chemical depolarization in an ammonium phosphate solution is conducted in order to remove any excess charge in the oxide that could lead to increased leakage and hence decreased breakdown voltage. The chemical depolarization in an ammonium phosphate solution is preferably conducted between 60 °C to 80 °C for 7 to 13 minutes, more preferably to at least 70 °C for more than 10 minutes.

Thereafter the surface treatment by boric acid comprising the application of the oxidizing boric acid solution and the application of the direct current to stimulate the oxidation reaction is repeated again.

The surface treatment with boric acid is repeated for at least three times. Thus, a stable oxide layer with a minimum number of defects may be provided and a desired high breakdown voltage may be reached.

The breakdown voltage is higher than 450 V, preferably higher than 550 V or higher than 600 V and up to 650 V.

Preferably, the polymer electrolyte solution for impregnation may comprise a PEDOT:PSS-solution or consist of a PEDOT:PSS-solution. PEDOT:PSS stands for poly(3,4-ethylenedioxy-thiophene) polystyrene sulfonate. PEDOT:PSS is a polymer mixture of two ionomers. One component in this mixture is made up of sodium polystyrene sulfonate which is a sulfonated polystyrene. Part of the sulfonyl groups are deprotonated and carry a negative charge. The other component poly(3,4-ethylenedioxythiophene) (PEDOT) is a conjugated polymer and carries positive charges and is based on polythiophene. Together the charged macromolecules form a macromolecular salt.

More preferably, as a PEDOT:PSS-solution for impregnation Clevios^{™} K, a PEDOT:PSS polymer dispersions from Heraeus^{®} is used, which has a conductivity of up to 1000 S/cm and good chemical, thermal and UV stability.

Using the specified polymer electrolyte solution allows a further improvement of electrical characteristics of the capacitor. In particular, the breakdown voltage of the capacitor may be further increased.

According to another aspect, the present invention refers to a polymer electrolytic capacitor as manufactured by the method as specified before.

According to another aspect, the present invention refers to any polymer electrolytic capacitor comprising a stack of level, flat layers, wherein the layers comprise an anode layer, a separator paper sheet and an anode layer, and wherein the anode layer is impregnated with a polymer electrolyte solution, preferably a PEDOT:PSS-solution.

Each of the level layers is formed in a homogenous flat plane.

The polymer electrolytic capacitor may have any feature as specified before regarding the manufacturing methods and vice versa.

In particular, the surface of the anode layer is fully covered by an oxide layer comprising aluminium oxide with a minimum density of defects.

Thus, operating voltages of the capacitor of more than 450 V, more than 500 V, more than 550 V, more than 600 V and most preferably up to 650 V may be achieved, wherein the breakdown voltage of the capacitor is higher than the operating voltage.

Furthermore, by the enclosed method a capacitor with desired low ESR (Equivalent Series Resistance) values at high frequencies of alternating current can be provided.

Further, the operating temperature of the provided capacitor may be elevated up to 125 °C, more preferably up to 150 °C without serious losses in the electrical properties.

Further, a level layer stack allows the design of a cuboid capacitor which can be arranged in a more compact and more flexible way than existing wound electrolytic capacitors. A more compact design also means a reduction of used space and weight of the capacitor, which is in particular useful for automotive applications.

Due to compact arrangement, short and thus low-inductive electrical connections between the capacitor and connected electrical components such as e.g. IGBT-modules may be realized. Parasitic impedances can be minimized.

Furthermore, several cuboid capacitors may be stacked together or may be arranged in parallel to provide bigger capacitors having a higher total capacity in a very simple way.

Further, the capacitors may be connected in series to provide a capacitor with higher total breakdown voltage.

Further, the electrical connections of the anode and cathode foils can be configured in various shapes and can be arranged at any side of the capacitor stack in order to contact various electrical components in a compact and preferably low-inductive manner.

According to another aspect, the present invention refers to the use of a polymer electrolytic capacitor at operating voltages up to 650 V.

The polymer electrolytic capacitor may have any feature as specified before, in particular regarding the manufacturing methods, and vice versa.

According to another aspect, the present invention refers to an assembly comprising an electronic module with a planar base area and a capacitor as specified before, wherein an outer plane surface of the capacitor and the planar base area are arranged in the same plane.

This allows a compact arrangement of the capacitor and the electronic module in a device, e.g. in a motor. Further this allows e.g. a compact arrangement of both, the electronic module and the capacitor on a common cooling body having a simple plane cooling surface.

In a preferred embodiment, the whole capacitor stack may be housed by a casing made of aluminium. The casing may be electrically connected to the cathode foils or may replace the cathode foils of the capacitor. An aluminium casing allows a high cooling performance and an improved temperature regulation of the capacitor.

As a result of a desired improved cooling, the capacitor stacks may arranged even closer to connected electrical components in order to further minimize electrical losses.

Further, as a result of improved cooling the capacitors may be used at higher temperatures, for examples in motors of automotive vehicles.

In the following, examples of the capacitor are described in detail by using figures. However, the invention is not restricted to the following examples.

The figures show:
Figure 1: Photograph of a stack of capacitor foils and separating paper sheets.
Figure 2: Schematical drawing of an anode foil.
Figure 3: Schematical drawing of an exemplarily setup used for reforming of the anode foils.
Figure 4: Diagram showing average ESR curves of electrolytic capacitors at different AC frequencies normalized to the ESR of the capacitors at an AC frequency of 100 Hz.
Figure 5: Diagram showing I-U-curves and breakdown voltages of electrolytic capacitors.
Figure 6: Diagram showing average ESR curves of electrolytic capacitors at different AC frequencies and at different temperatures.
Figure 7: Top view of a second example of a capacitor stack.
Figure 8: Side view of a second example of a capacitor stack.

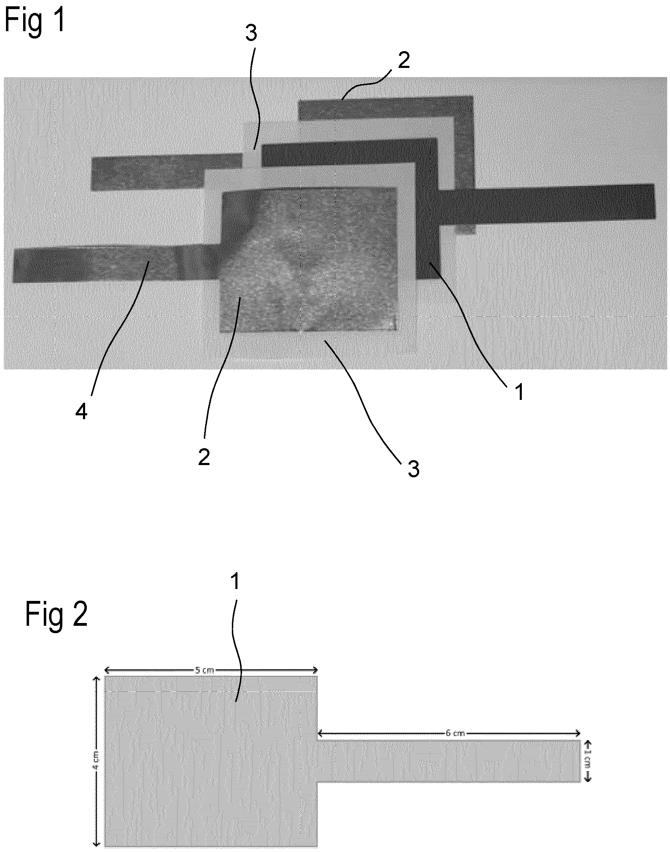

Figure 1 shows different foils and sheets which are to be stacked to build a capacitor according to an embodiment of the invention.

Anode foils 1 and cathode foils 2 are punched out of metal foils, e.g. in a rectangular shape with a protruding rectangular snip 4 for connection, as shown in Figure 2.

The anode foil is preferably an aluminium foil providing a layer on the surface comprising aluminium oxide. The cathode foil may be an aluminium foil as well.

Separator paper sheets 3 are cut slightly larger to ensure a complete coverage between the electrodes.

The paper sheets 3 may comprise cellulose paper, with a thickness of e.g. 90 µm and a density of e.g. 60 g/cm². Such paper provides good protection to mechanical shorts from burs on the foils.

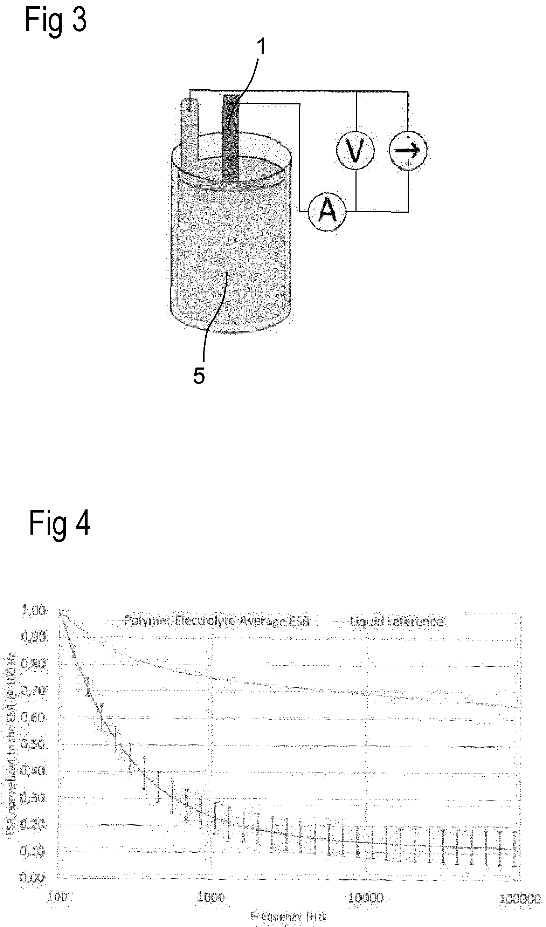

Figure 3 shows an exemplarily setup used for reforming of the anode foils 1.

After punching the oxide layer of the anode foil 1 is reformed by using a boric acid solution preferably at 90 °C. A constant direct current of e.g. 10 mA may be applied running from the anode foil 1 to a cylindrical counter electrode 5 as seen in figure 3.

This results in a slowly increasing voltage while defects in the oxide layer are healed, until a forming voltage is reached.

The forming voltage is reached, when a voltage curve has stabilized indicating that the reformation of the oxide is completed.

When the forming voltage is reached, the current is left on for several additional minutes, e.g. 2 minutes, after which the current is turned off.

Hereafter, a thermal depolarization step is performed, wherein the foil is heated up to 150 °C, e.g. for 5 min in an oven.

Thereafter, the oxide layer is reformed by treatment with boric acid solution, again.

Thereafter, the foil is chemically depolarized in an ammonium phosphate solution at e.g. 70 °C for 10 min.

After this, the oxide layer is reformed by treatment with boric acid solution, again.

The mentioned steps remove defects in the oxide layer and remove any excess charge in the oxide layer that could lead to an increased leakage and hence a decreased breakdown voltage of the oxide layer and thus of the capacitor.

After the described initial steps, the connection snips 4 may be covered, too, using polystyrene, to prevent leakage to the non-treated parts of the snip.

Hereafter, the anode foil 1 is vacuum impregnated with an PEDOT:PSS-based polymer electrolyte solution, ensuring good penetration of the oxide layer structure with the electrolyte. Preferably, the used electrolyte solution is the commercial PEDOT:PSS-based electrolyte solution CLEVIOS^{™} K SD 1 by Heraeus^{®}. The polymer electrolyte solution contains PEDOT:PSS in aqueous dispersion along with a mixture of different additives. Some of these additives may be polyglycols which increase breakdown voltage for polymer based capacitors. Glycerin may be a further additive, as it can help tuning the viscosity of the solution.

After impregnation of the anode foil 1, a capacitor stack is build up by cathode - paper - anode - paper - cathode, as seen in Figure 1. Preferably, the stack is built up layer by layer on a sample holder. Between every layer the sample is vacuum impregnated with the polymer electrolyte solution and dried in a ventilated oven, e.g. at 120°C, ensuring good connection between anode and cathode foils. After a final cathode foil is placed, a glass plate may be placed on top and clamped in place on the sample holder. Hereafter the stack may be dried at for several days, to ensure the evaporation of as much water as possible.

ESR measurements were performed at room temperature on the finished capacitor stacks, at 200 frequencies logarithmically distributed between 20 Hz and 100 kHz using a Keysight E4980AL LCR Meter. A logarithmic frequency distribution of data points was chosen as the ESR shows very flat tendencies at higher frequencies, why a lower density of data can be used. ESR measurements of eight different stacks according to the above described example were compared to a reference stack where the polymer electrolyte solution was exchanged for a commercial liquid high voltage electrolyte.

Figure 4 shows an average ESR curve of the polymer electrolytic capacitor of the first embodiment at different AC frequencies normalized to the ESR of the capacitor at an alternating current frequency of 100 Hz. Further, the ESR curve of a liquid electrolyte reference sample is shown, also normalized to an ESR at 100 Hz. At 100 Hz the ESR of the two capacitors is very similar at around 10 Ohm.

For liquid electrolytes the seen behavior is that the ESR drops to around 2/3 of the ESR at 100 Hz before flattening out and become close to constant at high frequencies around 100 kHz.

For the polymer electrolytic capacitor, the ESR at 100 kHz drops to 11 % compared to the ESR at 100 Hz. This significant larger decrease in ESR at high frequencies, causes the polymer aluminium electrolytic capacitor, to outperform traditional liquid electrolyte electrolytic capacitors, when it comes to ESR at high frequencies, where modern wide bandgap semiconductors normally operate.

Further, for breakdown testing a Vitrek 951i Electrical Safety Compliance Analyzer was used. A ramping voltage of 3 V/s was applied across the sample while voltage U and current I were measured. Peaks in the I-U-curve indicate breakdown phenomena.

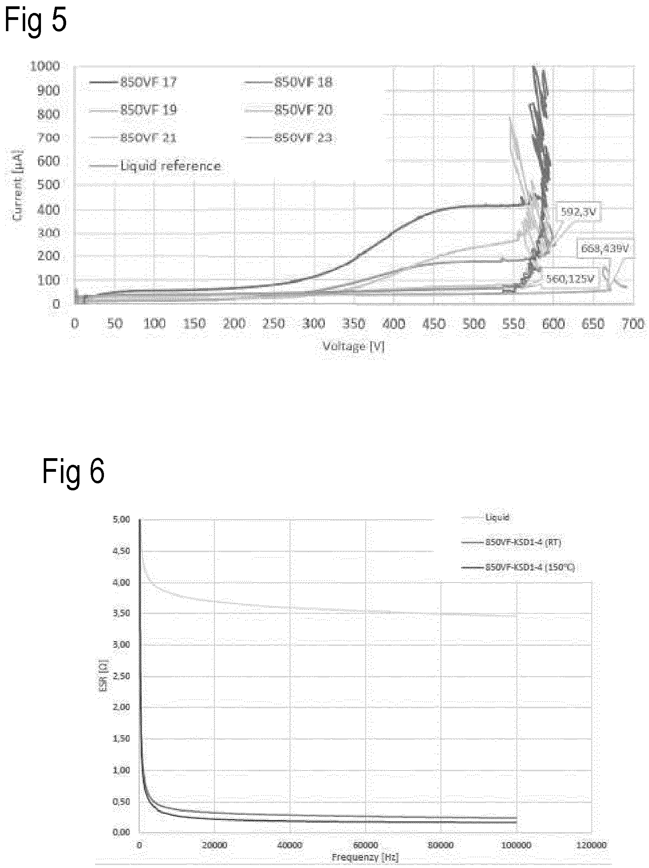

In Figure 5, breakdown voltages of the identical eight capacitor stacks which were also used for ESR measurements were measured at room temperature and compared to a reference stack using the same liquid electrolyte as the one used for the ESR measurements.

Consistent breakdowns above 550 V, approximately between 560 V and 595 V can be seen. This is significantly higher than any previous results for breakdown of polymer electrolyte capacitors known from literature.

Further measurements show that ESR hardly differs at elevated temperatures up to 150 °C. For example, figure 6 shows average ESR curves of electrolytic capacitors at room temperature and for comparison at 150 °C.

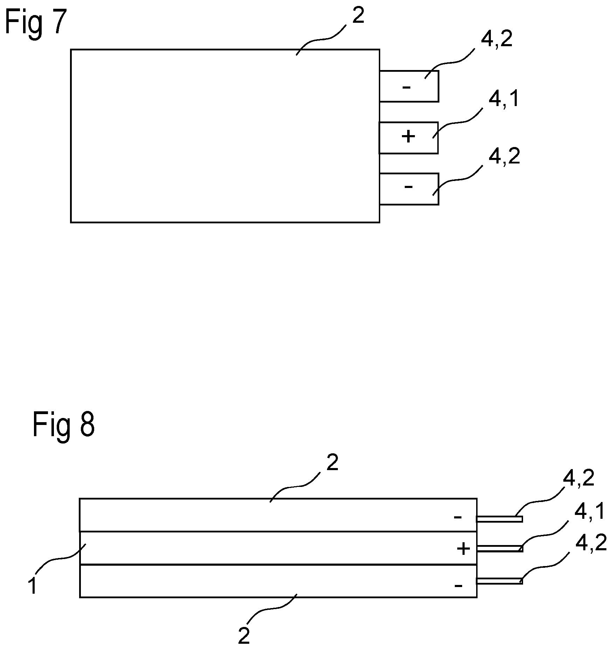

Figures 7 and 8 show another example of a capacitor stack. The stack of rectangular planar layers allows a compact capacitor design and a compact arrangement of the connection snips 4 next to each other. For example, the connection snips 4 of the anode foil 1 and the cathode foils 2 can be shifted side by side as shown in Figure 7, so that multiple electrical components can be electrically connected to the capacitor stack in a compact arrangement.

Furthermore, the compact arrangement makes it easy to connect several capacitors in series to obtain a capacitor with an even higher operating voltage. Further, several stacks may be arranged parallel to each other or may be stacked on top of each other to obtain a capacitor with a higher total capacitance.

### List of reference signs

- 1: anode foil
- 2: cathode foil
- 3: separator paper sheet
- 4: connection snip
- 5: cylindrical counter electrode

## Claims

1. Method for manufacturing of a polymer electrolytic capacitor comprising the following steps in the following order:
- providing a metal foil comprising aluminium with a layer on the surface comprising aluminium oxide,
- punching an anode foil (1) out of the metal foil,
- reforming the oxide layer and forming the oxide layer at the punched out edges by the steps of
- surface treatment with boric acid comprising
- oxidizing the surface of the anode foil (1) by using a boric acid solution and
- applying a direct current of at least 8 mA, preferably at least 10 mA, to the anode foil (1) to heal defects in the oxide layer until a forming voltage is reached,
- depolarization of the anode foil (1) by heating the anode foil (1) to more than 100 °C,
- repeating the surface treatment with boric acid,
- chemical depolarization in an ammonium phosphate solution and
- repeating the surface treatment with boric acid,
- impregnating the oxidized anode foil (1) with a polymer electrolyte solution, preferably comprising PEDOT:PSS,
wherein no further steps are conducted between reforming and forming the oxide layer and impregnating the oxidized anode foil (1) with a polymer electrolyte solution, and
- building the capacitor from the anode foil comprising a step of stacking the anode foil (1), a separator paper sheet (3) and a cathode foil (2) to build a capacitor stack.

2. Method for manufacturing of a polymer electrolytic capacitor according to claim 1, wherein no further steps are conducted between reforming and forming the oxide layer and impregnating the oxidized anode foil.

3. Method for manufacturing of a polymer electrolytic capacitor according to any one of claims 1 or 2, wherein the polymer electrolyte solution is a PEDOT:PSS-solution, in which PEDOT:PSS is formed as a macromolecular salt.

4. Method for manufacturing of a polymer electrolytic capacitor according to any one of claims 1 to 3, wherein surface treatment with boric acid is performed at an oxidizing temperature of at least 70 °C.

5. Method for manufacturing of a polymer electrolytic capacitor according to any one of claims 1 to 4, wherein surface treatment with boric acid is performed at an oxidizing temperature of at least 90 °C.

6. Method for manufacturing of a polymer electrolytic capacitor according to any one of claims 1 to 5, wherein after reaching the forming voltage, a direct current of at least 8 mA, preferably 10 mA, is applied to the anode foil (1) for at least additional 1 to 2 minutes.

7. Method for manufacturing of a polymer electrolytic capacitor according to any one of claims 1 to 6, wherein depolarization of the anode foil (1) by heating the anode foil (1) is conducted for 3 to 7 minutes.

8. Method for manufacturing of a polymer electrolytic capacitor according to any one of claims 1 to 7, wherein depolarization of the anode foil (1) by heating the anode foil (1) is conducted by heating the anode foil (1) to more than 150 °C.

9. Method for manufacturing of a polymer electrolytic capacitor according to any one of claims 1 to 8, wherein chemical depolarization in an ammonium phosphate solution is conducted between 60 °C to 80 °C for 7 to 13 minutes.

10. Method for manufacturing of a polymer electrolytic capacitor according to any one of claims 1 to 9, wherein the surface treatment with boric acid is repeated at least three times.

11. Method for manufacturing of a polymer electrolytic capacitor according to any one of claims 1 to 10, if the polymer electrolyte solution comprises PEDOT:PSS, the PEDOT:PSS-solution is a PDEOT:PSS polymer dispersion, which has a conductivity of up to 1000 S/cm.

12. Polymer electrolytic capacitor as manufactured by the method according to any one of claims 1 to 11, comprising a stack of level layers, the layers comprising an anode layer (1), wherein the surface of the anode layer (1) is fully covered by an oxide layer comprising aluminium oxide, a separator paper sheet (3) and a cathode layer (2), wherein at least the anode layer (1) is impregnated with a polymer electrolyte solution, preferably a PEDOT:PSS-solution, wherein the capacitor is suitable for use at operating voltages between 450 V and 650 V.

13. Use of the polymer electrolytic capacitor according to claim 12 at operating voltages between 450 V and 650 V.

14. Assembly comprising an electronic module with a planar base area and the capacitor according to claim 12, wherein an outer plane surface of the capacitor and the planar base area are arranged in the same plane.

## Patentansprüche

1. Verfahren zur Herstellung eines PolymerElektrolytkondensators, das die folgenden Schritte in der folgenden Reihenfolge umfasst:
- Bereitstellen einer Metallfolie aus Aluminium mit einer Oxidschicht aus Aluminiumoxid auf der Oberfläche,
- Ausstanzen einer Anodenfolie (1) aus der Metallfolie,
- Umformen der Oxidschicht und Ausbilden der Oxidschicht an den ausgestanzten Kanten durch die folgenden Schritte:
- Oberflächenbehandlung mit Borsäure, umfassend
- Oxidieren der Oberfläche der Anodenfolie (1) unter Verwendung einer Borsäurelösung und
- Anlegen eines Gleichstroms von mindestens 8 mA, vorzugsweise mindestens 10 mA, an die Anodenfolie (1), um Defekte in der Oxidschicht zu schließen, bis eine Formspannung erreicht ist,
- Depolarisierung der Anodenfolie (1) durch Erhitzen der Anodenfolie (1) auf über 100 °C,
- Wiederholung der Oberflächenbehandlung mit Borsäure,
- chemische Depolarisierung in einer Ammoniumphosphatlösung und
- Wiederholung der Oberflächenbehandlung mit Borsäure,
- Imprägnieren der oxidierten Anodenfolie (1) mit einer Polymerelektrolytlösung, vorzugsweise bestehend aus PEDOT:PSS,
wobei zwischen dem Umformen und Ausbilden der Oxidschicht und dem Imprägnieren der oxidierten Anodenfolie (1) mit einer Polymerelektrolytlösung keine weiteren Schritte durchgeführt werden, und
- Aufbau des Kondensators aus der Anodenfolie, umfassend einen Schritt des Schichtens der Anodenfolie (1), einer Separatorpapierbahn (3) und einer Kathodenfolie (2), um einen Kondensatorstapel zu bilden.

2. Verfahren zur Herstellung eines Polymerelektrolytkondensators nach Anspruch 1, wobei zwischen dem Umformen und Ausbilden der Oxidschicht und dem Imprägnieren der oxidierten Anodenfolie keine weiteren Schritte durchgeführt werden.

3. Verfahren zur Herstellung eines Polymerelektrolytkondensators nach einem der Ansprüche 1 oder 2, wobei die Polymerelektrolytlösung eine PEDOT:PSS-Lösung ist, in der PEDOT:PSS als makromolekulares Salz vorliegt.

4. Verfahren zur Herstellung eines Polymerelektrolytkondensators gemäß einem der Ansprüche 1 bis 3, wobei die Oberflächenbehandlung mit Borsäure bei einer Oxidationstemperatur von mindestens 70 °C durchgeführt wird.

5. Verfahren zur Herstellung eines Polymerelektrolytkondensators gemäß einem der Ansprüche 1 bis 4, wobei die Oberflächenbehandlung mit Borsäure bei einer Oxidationstemperatur von mindestens 90 °C durchgeführt wird.

6. Verfahren zur Herstellung eines Polymerelektrolytkondensators gemäß einem der Ansprüche 1 bis 5, wobei nach Erreichen der Formspannung ein Gleichstrom von mindestens 8 mA, vorzugsweise 10 mA, für mindestens weitere 1 bis 2 Minuten an die Anodenfolie (1) angelegt wird.

7. Verfahren zur Herstellung eines PolymerElektrolytkondensators gemäß einem der Ansprüche 1 bis 6, wobei eine Depolarisation der Anodenfolie (1) durch Erwärmen der Anodenfolie (1) für 3 bis 7 Minuten durchgeführt wird.

8. Verfahren zur Herstellung eines Polymerelektrolytkondensators gemäß einem der Ansprüche 1 bis 7, wobei eine Depolarisation der Anodenfolie (1) durch Erwärmen der Anodenfolie (1) durchgeführt wird, indem die Anodenfolie (1) auf über 150 °C erhitzt wird.

9. Verfahren zur Herstellung eines Polymerelektrolytkondensators gemäß einem der Ansprüche 1 bis 8, wobei chemische Depolarisation in einer Ammoniumphosphatlösung bei 60 °C bis 80 °C für 7 bis 13 Minuten durchgeführt wird.

10. Verfahren zur Herstellung eines Polymerelektrolytkondensators gemäß einem der Ansprüche 1 bis 9, wobei die Oberflächenbehandlung mit Borsäure mindestens dreimal wiederholt wird.

11. Verfahren zur Herstellung eines Polymerelektrolytkondensators gemäß einem der Ansprüche 1 bis 10, wobei, falls die Polymerelektrolytlösung PEDOT:PSS enthält, die PEDOT:PSS-Lösung eine PDEOT:PSS-Polymerdispersion ist, die eine Leitfähigkeit von bis zu 1000 S/cm aufweist.

12. Polymerelektrolytkondensator, hergestellt nach einem der Verfahren gemäß einem der Ansprüche 1 bis 11, umfassend einen Stapel aus ebenen Schichten, wobei die Schichten eine Anodenschicht (1) umfassen, wobei die Oberfläche der Anodenschicht (1) vollständig von einer Oxidschicht bedeckt ist, die Aluminiumoxid umfasst, einer Separatorpapierbahn (3) und einer Kathodenschicht (2), wobei zumindest die Anodenschicht (1) mit einer Polymerelektrolytlösung, vorzugsweise einer PEDOT:PSS-Lösung, imprägniert ist, wobei der Kondensator für den Einsatz bei Betriebsspannungen zwischen 450 V und 650 V geeignet ist.

13. Verwendung des Polymerelektrolytkondensators nach Anspruch 12 bei Betriebsspannungen zwischen 450 V und 650 V.

14. Baugruppe, umfassend ein elektronisches Modul mit einer ebenen Grundfläche und den Kondensator nach Anspruch 12, wobei eine äußere ebene Oberfläche des Kondensators und die ebene Grundfläche in derselben Ebene angeordnet sind.

## Revendications

1. Procédé de fabrication d'un condensateur électrolytique polymère comprenant les étapes suivantes, dans l'ordre suivant :
- fournir une feuille métallique comprenant de l'aluminium comportant à sa surface une couche comprenant de l'oxyde d'aluminium,
- découper une feuille d'anode (1) dans la feuille métallique,
- reformer la couche d'oxyde et former la couche d'oxyde au niveau des bords découpés par les étapes suivantes :
- un traitement de surface à l'acide borique comprenant
- l'oxydation de la surface de la feuille d'anode (1) à l'aide d'une solution d'acide borique et
- l'application d'un courant continu d'au moins 8 mA, de préférence d'au moins 10 mA, à la feuille d'anode (1) afin de réparer les défauts de la couche d'oxyde jusqu'à ce qu'une tension de formation soit atteinte,
- la dépolarisation de la feuille d'anode (1) par chauffage de celle-ci à une température supérieure à 100 °C,
- la répétition du traitement de surface à l'acide borique,
- une dépolarisation chimique dans une solution de phosphate d'ammonium et
- répéter le traitement de surface à l'acide borique,
- imprégnation de la feuille d'anode oxydée (1) avec une solution d'électrolyte polymère, comprenant de préférence du PEDOT:PSS,
aucune autre étape n'étant effectuée entre la reformulation et la formation de la couche d'oxyde et l'imprégnation de la feuille d'anode oxydée (1) avec une solution d'électrolyte polymère, et
- assembler le condensateur à partir de la feuille d'anode , comprenant une étape consistant à empiler la feuille d'anode (1), une feuille de papier séparateur (3) et une feuille de cathode (2) pour former un empilement de condensateur.

2. Procédé de fabrication d'un condensateur électrolytique polymère selon la revendication 1, dans lequel aucune autre étape n'est effectuée entre la reformulation et la formation de la couche d'oxyde et l'imprégnation de la feuille d'anode oxydée.

3. Procédé de fabrication d'un condensateur électrolytique polymère selon l'une quelconque des revendications 1 ou 2, dans lequel la solution d'électrolyte polymère est une solution de PEDOT:PSS, dans laquelle le PEDOT:PSS se présente sous la forme d'un sel macromoléculaire.

4. Procédé de fabrication d'un condensateur électrolytique polymère selon l'une quelconque des revendications 1 à 3, dans lequel le traitement de surface à l'acide borique est effectué à une température d'oxydation d'au moins 70 °C.

5. Procédé de fabrication d'un condensateur électrolytique polymère selon l'une quelconque des revendications 1 à 4, dans lequel le traitement de surface à l'acide borique est effectué à une température d'oxydation d'au moins 90 °C.

6. Procédé de fabrication d'un condensateur électrolytique polymère selon l'une quelconque des revendications 1 à 5, dans lequel, après avoir atteint la tension de formation, un courant continu d'au moins 8 mA, de préférence 10 mA, est appliqué à la feuille d'anode (1) pendant au moins 1 à 2 minutes supplémentaires.

7. Procédé de fabrication d'un condensateur électrolytique polymère selon l'une quelconque des revendications 1 à 6, dans lequel la dépolarisation de la feuille d'anode (1) par chauffage de la feuille d'anode (1) est effectuée pendant 3 à 7 minutes.

8. Procédé de fabrication d'un condensateur électrolytique polymère selon l'une quelconque des revendications 1 à 7, dans lequel la dépolarisation de la feuille d'anode (1) par chauffage de la feuille d'anode (1) est effectuée en chauffant la feuille d'anode (1) à une température supérieure à 150 °C.

9. Procédé de fabrication d'un condensateur électrolytique polymère selon l'une quelconque des revendications 1 à 8, dans lequel dépolarisation chimique dans une solution de phosphate d'ammonium est réalisée à une température comprise entre 60 °C et 80 °C pendant une durée de 7 à 13 minutes.

10. Procédé de fabrication d'un condensateur électrolytique polymère selon l'une quelconque des revendications 1 à 9, dans lequel le traitement de surface à l'acide borique est répété au moins trois fois.

11. Procédé de fabrication d'un condensateur électrolytique polymère selon l'une quelconque des revendications 1 à 10, dans lequel, si la solution d'électrolyte polymère comprend du PEDOT:PSS, la solution de PEDOT:PSS est une dispersion polymère de PDEOT:PSS, qui présente une conductivité allant jusqu'à 1000 S/cm.

12. Condensateur électrolytique polymère obtenu par le procédé selon l'une quelconque des revendications 1 à 11, comprenant un empilement de couches parallèles, les couches comprenant une couche d'anode (1), dans lequel la surface de la couche d'anode (1) est entièrement recouverte d'une couche d'oxyde comprenant de l'oxyde d'aluminium, une feuille de papier séparateur (3) et une couche cathodique (2), dans lequel au moins la couche d'anode (1) est imprégnée d'une solution d'électrolyte polymère, de préférence une solution de PEDOT:PSS, dans lequel le condensateur est adapté à une utilisation à des tensions de fonctionnement comprises entre 450 V et 650 V .

13. Utilisation du condensateur électrolytique polymère selon la revendication 12 à des tensions de fonctionnement comprises entre 450 V et 650 V.

14. Ensemble comprenant un module électronique présentant une surface de base plane et le condensateur selon la revendication 12, dans lequel une surface plane extérieure du condensateur et la surface de base plane sont disposées dans le même plan.
